# EUROPEAN PATENT SPECIFICATION

(11) **EP 2 192 973 B1**
(45) Date of publication and mention of the grant of the patent: **16.03.2011**
(21) Application number: 08801414.7
(22) Date of filing: 26.09.2008
(51) Int. Cl.: B01D 63/08, B01D 63/16, B01D 25/26, B01D 29/41, B01D 36/00, C02F 3/12

(54) **DISC TYPE FILTRATION DEVICE WITH AERATION PLATES**
SCHEIBENARTIGE FILTRATIONSVORRICHTUNG MIT LÜFTUNGSPLATTEN
DISPOSITIF DE FILTRATION DE TYPE DISQUE AVEC PLAQUES D'AÉRATION

(30) Priority: 28.09.2007 EP 07117497
(43) Date of publication of application: 09.06.2010
(73) Proprietor: Grundfos BioBooster A/S, 8850 Bjerringbro (DK)
(72) Inventor: MADSEN, Steffen, DK-8950 Ørsted (DK)
(74) Representative: Plougmann & Vingtoft A/S
(86) International application number: PCT/DK2008/050238
(87) International publication number: WO 2009/039861

(56) References cited:
- WO-A-00/16826
- WO-A-93/12859
- DE-A1- 10 331 463
- FR-A- 2 539 320
- JP-A- 2 102 716

## Description

### FIELD OF THE INVENTION

The present invention relates to a reactor unit for treatment of a liquid. The invention moreover relates to a reactor system comprising one or more reactor units. Finally, the invention relates to a method for treatment of a liquid and uses of the reactor unit.

### BACKGROUND OF THE INVENTION

In treatment of fluids, in particular liquids, filtering and/or aeration may be essential elements. A number of processes and devices are known. Examples of such treatment of liquids which may involve both aeration and filtration of the liquid are the cultivation of bacteria in liquid and the purification of waste water or sewage in the activated sludge process. In such an activated sludge process, atmospheric air or pure oxygen brought into contact with sewage combined with organisms to develop a biological floc which reduces the organic content of the sewage. The biological floc may be filtered by the filtering device in the reactor.

A general arrangement of an activated sludge process for removing pollution includes an aeration tank where air or oxygen is injected in the mixed liquid as well as a settling tank to allow the biological flocs to settle, thus separating the biological sludge from the treated water. The settling tank may comprise filtration of the liquid in the separation of the sludge and the treated water. This process may however be slow and/or inefficient.

Alternatively, sewage may be treated in large round or oval ditches with one or more horizontal aerators, typically called brush or disc aerators, which drive the mixed liquid around the ditch and provide aeration. These are oxidation ditches. They have the advantage that they are relatively easy to maintain and are resilient to shock loads that often occur in smaller communities (i.e. at breakfast time and in the evening). However, they may also be slow and/or inefficient, in that typical design parameters are: a hydraulic retention time of 24 - 48 hours, and a sludge age of 12 - 20 days.

In another alternative, sewage may be treated by injection of oxygen into a pressured return sludge stream which is injected into the base of a deep columnar tank buried in the ground. Such shafts may be up to 100 meters deep and are filled with sewage liquid. As the sewage rises, the air or oxygen forced into solution by the pressure at the base of the shaft breaks out as molecular oxygen providing a highly efficient source of oxygen for the activated sludge liquid. The rising oxygen and injected return sludge provide the physical mechanism for mixing of the sewage and sludge. Mixed sludge and sewage is decanted at the surface and separated into supernatant and sludge components. The efficiency of deep shaft treatment can be high. However, the costs of construction are also high.

Reactors comprising gas supply, filtrate withdrawal means and mixing means are known from the following prior art documents:
WO 93/12859 discloses a reactor/ filtration system comprising stationary filter plates around a rotating shaft with mixer discs. JP 02 102716 discloses a reactor system with stationary aeration plates adjacent a rotating filter disc stack. FR 2 539 320 discloses a reactor comprising two different kinds of stationary filter discs with individual fluid connections arranged around a rotating shaft comprising disc members; however no gas supply is foreseen. WO 00/16826 and DE 102 31 463 disclose both disclose systems with rotating filter and gas supply means on a common shaft.

However, an improved reactor unit for treatment of liquid would be advantageous, and in particular a more efficient and/or reliable reactor unit would be advantageous. In particular, a reactor unit providing a faster treated output liquid and/or a better filtration/separation of elements of the liquid would be advantageous.

### OBJECT OF THE INVENTION

It is an object of the invention to provide a reactor unit and a reactor system which provides a higher output of treated liquid. It is moreover an object of the invention to provide a reactor unit and reactor system which provides a high degree of filtration. It is a further object of the present invention to provide a flexible reactor unit and reactor system which may be adapted to the composition of the liquid to be treated. It is a further object of the present invention to provide an alternative to the prior art. In particular, it may be seen as an object of the present invention to provide a reactor unit and reactor system that solve the above mentioned problems of the prior art with regard to low efficiency and/or high construction costs.

### SUMMARY OF THE INVENTION

Thus, the above described object and several other objects are intended to be obtained in a first aspect of the invention by providing a reactor unit for treatment of a liquid, said reactor unit comprising: a first number of parallel filtering plates (40) of a first material, said first material being permeable to liquid, each filtering plate (40) having outlet means for outletting liquid which has permeated into the plate, where each filtering plate (40) of the first number of filtering plates is arranged to be stationary within the reactor unit; a second number of aeration plates (50) of a second material, said second material being permeable to air, each aeration plate (50) having inlet means for inletting air, said aeration plate(s) (50) being placed in parallel to the filtering plate(s), where each aeration plate (40) of the second number of aeration plates is arranged to be stationary within the reactor unit; at least one disc member of a disc material, wherein each of said at least one disc is arranged to be placed adjacent to a filtering plate or an aeration plate, but leaving a gap between said filtering plate or aeration plate and the disc member, and in parallel to said filtering and aeration plates; and means for rotating the at least one disc member around a central axis through the at least one disc member. In the reactor unit of the above configuration, the first number of filtering plates and the second number of aeration plates are stationary within the reactor unit, whilst the at least one disc member is arranged to rotate and to thereby create a flow of liquid across the surface of the at least one plate, when the reactor unit is submerged or immersed in liquid.

The filtering aeration plates being stationary within the reactor unit has the advantage that inlet and outlet piping to and from the at least filtering and aeration plates may be implemented in a simple manner. Thus, fittings and mounting of the reactor unit is simplified compared to reactor units wherein the plates providing treatment of a liquid is rotating or moving. Moreover, the size, configuration and/or material of the disc member may render the disc member lighter than the filtering and aeration plates; hereby the impact of any disequilibrium or unbalance is reduced compared to when the at least filtering and aeration plates are rotated, in that this impact increases with increased mass to be rotated.

Moreover, since the aeration and filtering plates do not have to be rotated in order to create a flow across their surface, considerations of weight and balance of the aeration and filtering plates are not as important as if the aeration and filtering plates had to be rotated or moved in order to create a flow across their surface.

The reactor may be a closed system that operates under pressure from a pump. Alternatively, the reactor may be an open reactor or may be at atmospheric pressure, in which case the aeration and filtering plates and the at least one disc member may be submerged or immersed into liquid in the reactor.

The reactor unit may comprise a first number of filtering plates and a second number of aeration plates combined with the first a number of filtering plates, where the first and second numbers depend upon the liquid to be treated. This provides a highly flexible reactor unit in that the composition of the plates of the reactor unit may be dimensioned to the specific use and/or specific liquids. Preferably, the outer dimensions of the filtering plates and the aeration plates are substantially identical, so that the required filtering and aeration plates may readily be used together with the at least one disc member. A disc member may be present between and adjacent to any two neighbouring plates, no matter if the neighbouring plates are similar plates, such as two filtering plates or two aeration plates, or different plates, such as a filtering plate and an aeration plate. The term "filtering plate" is meant to denote any plate able to provide filtering or filtration of solid material in a fluid from the fluid.

According to a further aspect of the invention, the reactor unit further comprises: at least one outlet pipe arranged to extend through an outlet opening in each of the first number of filtering plates and each of the second number of aeration plates, where the interior of the at least one outlet pipe is in fluid connection with an outlet opening in the at least one filtering plates through which the at least outlet pipe extend(s); at least one air inlet pipe for connection to a source of air, said at least one air inlet pipe being arranged to extend through an inlet opening in each of the first number of filtering plates and each of the second number of aeration plates, where the interior of the at least one inlet pipe is in air tight connection with an inlet opening in the at least one aeration plates through which the at least inlet pipe extend(s).

The outlet pipes are meant to pass filtered liquid or permeate from outlet openings of the filtering plates and the inlet pipes are meant to pass air into the inlet openings of the aeration plates from a source of air. Thus, the outlet pipes may be connected to the outlet openings of the filtering plates in order to provide a fluid tight connection for filtered liquid from the outlet opening of the filtering plate to a hole or outlet of one of the end pieces. Moreover, the inlet pipes may be connected to the inlet openings of the aeration plates in order to provide an air tight connection for inlet air from a hole or inlet of one of the end pieces to the inlet opening of the aeration plates. Preferably, the outlet pipes also extend through openings in the aeration plates, intended for passing the outlet pipes through the aeration plate(s) without getting into contact with the material or the interior of the aeration plate(s). Similarly, the inlet pipe(s) is/are lead through opening(s) in the filtering plate(s) without being in contact with the interior of the filtering plate. The opening(s) of the filtering plate(s) through which the inlet pipe(s) extend(s) is/are closed off, e.g. by rendering the material of the filtering plate not permeable to gas or liquid within the periphery of the openings. Similarly, the opening(s) of the aeration plate(s) through which the outlet pipe(s) extend(s) is/are closed off, e.g. by rendering the material of the aeration plate not permeable to gas or liquid within the periphery of the openings. Moreover, the reactor unit may comprise sealing means in order to ensure an appropriate sealing between the inlet pipes and the inlet opening(s) of the aeration plate(s), and between the outlet pipes and outlet opening(s) of the filtering plate(s) in order to avoid any inappropriate loss of air or liquid.

According to a further aspect of the invention, each of the first number of filtering plates comprises a pattern of internal cavities connected to the outlet means for distributing liquid permeated into the inside of the plate to the outlet means of the plate. Hereby, an efficient filtration may be obtained and the filtered liquid may be outlet through the outlet means to ensure that the filtered liquid is not mixed with un-filtered liquid.

According to another aspect of the invention each of the second number of aeration plates comprises a pattern of internal cavities connected to the inlet means for distribution of air inlet inside the plate. Hereby, an efficient distribution of air inside the plate may be obtained and the generation of air bubbles may be relatively uniform across the surface of the plate.

According to another aspect of the invention, said first material and/or said second material comprise a sintered material or a polymer material. The polymer material may have chemically formed microscopic pores. Plates of these materials provide an appropriate porosity and/or mechanical strength. The sintered material may for instance be a ceramic or metal material.

According to yet another aspect of the invention, the at least one disc member has a surface configuration arranged for creating a flow of a liquid in a direction substantially in parallel to the disc member, when the reactor unit is immersed or submerged in the liquid and the at least one disc member is (are) rotated.

The wording "the reactor unit is immersed or submerged in liquid" is meant to denote that at least a part of the at least one plate and part of the disc member is immersed or submerged in liquid.

The flow substantially in parallel to the disc member may be split up into a radial component as well as a cross flow component as described above. The created flow of the liquid parallel to the plane of the disc member should provide a flow of the liquid across the surface of the plate of the reactor unit, which assists in detachment of air bubbles from the surface of the aeration plates and in preventing the surface of filtering plates from fouling or clogging. The surface configuration of the disc member may comprise one or more openings through, recesses in or elevations on said disc member. Alternatively, the disc member may comprise a number of spikes or spokes extending radially from a centre point. The configuration or construction of the disc member may be any appropriate configuration or construction which is arranged for providing a flow or circulation of a liquid upon rotation or movement of the disc member. Preferably, the design or configuration of the disc member is such that a relatively large cross flow component and a relatively small radial component of the flow across the plate is achieved. The openings through, recesses in or elevations on the disc member may provide pulsations in the flow across the surface of the plate(s) of the reactor unit. In case of aeration plate(s), pulsations in the flow may facilitate the detachment of air bubbles from the aeration plate, which in turn may provide air bubbles of smaller sizes, and in the case of filtering plate(s), pulsations may assist in keeping the filtering plate(s) clean.

According to another aspect, the surface configuration of the disc member comprises one or more projections arranged in the direction from the centre to the periphery of the disc member. Such projections may be blades or paddles fixed to or integrated with the surface of the disc member. The shape of the projections along the surface of the disc member may be curved or they may define straight lines. Such projections may provide a larger flow of the liquid across the surface of the plates of the reactor unit. Again, in case of aeration plate(s), pulsations in the flow may facilitate the detachment of air bubbles from the aeration plate, which in turn may provide air bubbles of smaller sizes, and in the case of filtering plate(s), pulsations may assist in keeping the filtering plate(s) clean.

Preferable, the material of the at least one disc member comprises a plastic material or a metal alloy. The choice of such materials provides a disc member with an appropriate strength and mass. Stainless steel may be advantageous due to its low corrosion.

According to a further aspect of the invention, the surface configuration of the at least one disc member comprises one or more openings through, recesses in or elevations on said at least one disc member. Alternatively, the at least one disc member may comprise a number of spikes or spokes extending radially from a centre point. The configuration or construction of the disc member may be any appropriate configuration or construction which is arranged for providing a flow or circulation of a liquid upon rotation or movement of the disc member. Preferably, the design or configuration of the at least one disc member is such that a relatively large cross flow component and a relatively small radial component of the flow across the plate is achieved.

According to another aspect, the surface configuration of the at least one disc member comprises one or more projections arranged in the direction from the centre to the periphery of the disc member. Such projections may be blades or paddles fixed to or integrated with the surface of the disc member. The shape of the projections along the surface of the disc member may be curved or they may define straight lines.

According to a further aspect, the reactor unit moreover comprises at least one spacer arranged to hold a disc member pivotally within the periphery thereof. The spacer may ensure that a specific distance exists between the at least one plate and the at least one disc member of the reactor unit.

According to another aspect, the reactor unit moreover comprises a shaft extending through a central hole of each of each of the at least one disc member, where the shaft comprises means for making said at least one disc rotate. It is conceivable that more than one shaft exists; however, each disc member has a shaft extending through a central hole in it for facilitating rotation of the disc member. Moreover, the term "a shaft extending through a central hole of a disc member" is meant to cover that the shaft may extend through total thickness or depth of the disc member or that the shaft extends into the inside of the disc member.

According to another aspect of the invention, the outlet means of each of the filtering plates of the reactor unit is/are in sealed liquid connection with the outlet means of the other filtering plates, if any, of the reactor unit. Hereby, filtered liquid may be outlet from each filtering plates to an outlet of the reactor unit without getting into contact with untreated or unfiltered liquid.

According to a further aspect of the invention, the inlet means of each of the aeration plates of the reactor unit is/are in sealed gas connection with the inlet means of the other aeration plates, if any, of the reactor unit. Hereby, air or gas may be inlet to each aeration plates from an inlet to the reactor unit.

The invention moreover relates to a reactor system comprising one or more of the reactor units according to the invention. This reactor system has equivalent advantages as those described above.

According to another aspect of the invention, the reactor system further comprises gas inlet means; liquid inlet means for inletting liquid to be treated; liquid outlet means for outletting treated liquid; and motor means for making the disc(s) of each reactor unit rotate. Moreover, the reactor system may comprise gas outlet means for degassing, which is useful if a composite gas, e.g. such as atmospheric air, is used for aerating the liquid. The reactor system may also comprise additional outlet means for outletting of retentate.

According to another aspect, the invention also relates to a method of treatment of a liquid in a reactor. The method comprises inletting liquid to be treated into the reactor, wherein said liquid is inlet under a pressure above the atmospheric pressure; rotating the at least one disc about a central axis through the disc in order to generate a cross flow of the liquid over the at least one plate of a reactor unit; outletting liquid from the outlet means of the reactor; wherein the reactor comprises bacteria arranged for reacting with the liquid to be treated while said liquid to be treated is inside the reactor. This method exhibits similar advantages as those described above in connection with the reactor unit.

Finally, the invention relates to the use of a reactor unit according to the invention for cleaning a liquid, preferably for cleaning waste water, or for culturing bacteria in a liquid. It should be noted that the term "culturing bacteria" is meant to be synonymous with the terms "growing a bacteria culture" and "cultivating bacteria".

### BRIEF DESCRIPTION OF THE FIGURES

The reactor unit and reactor system according to the invention will now be described in more detail with regard to the accompanying figures. The figures show one way of implementing the present invention and is not to be construed as being limiting to other possible embodiments falling within the scope of the attached claim set. Like reference numerals denote like elements throughout the figures.
Figure 1 shows an exemplary reactor unit of the invention in exploded view;
Figure 2 shows an exemplary disc of a reactor unit of the invention;
Figure 3 shows an alternative reactor unit of the invention in exploded view;
Figure 4 shows a reactor unit of the invention seen from the end piece thereof;
Figure 5 is a cross-section of the reactor unit of Figure 3;
Figures 6a to 6c show views of an exemplary filtering plate of a reactor unit of the invention; and
Figures 7a to 7c show views of an exemplary aeration plate of a reactor unit of the invention;
Figure 8 shows a cross-section of an exemplary reactor unit inside a reactor; and
Figure 9 shows a reactor system comprising five reactor units.

### DETAILED DESCRIPTION OF AN EMBODIMENT

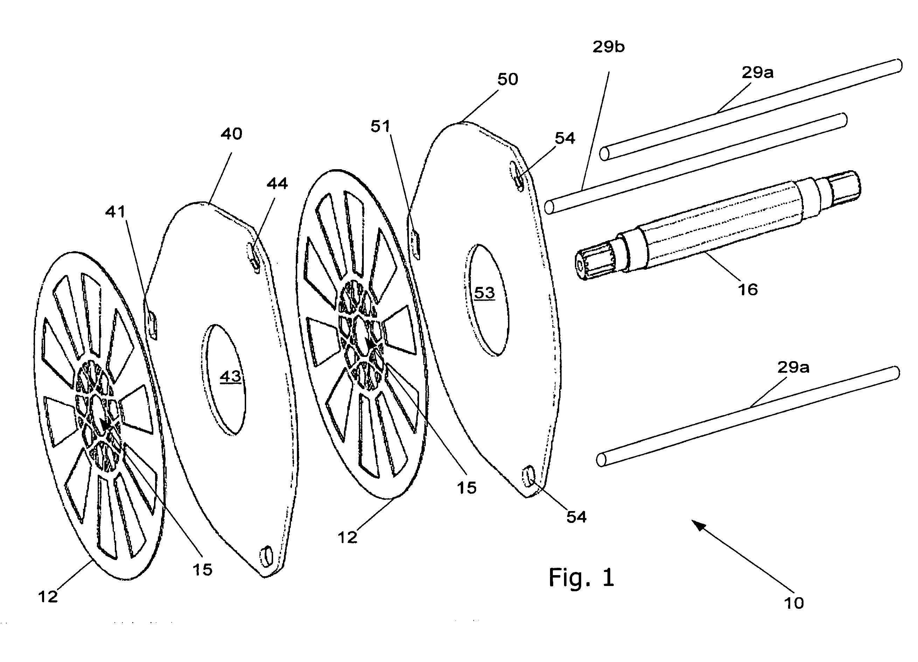

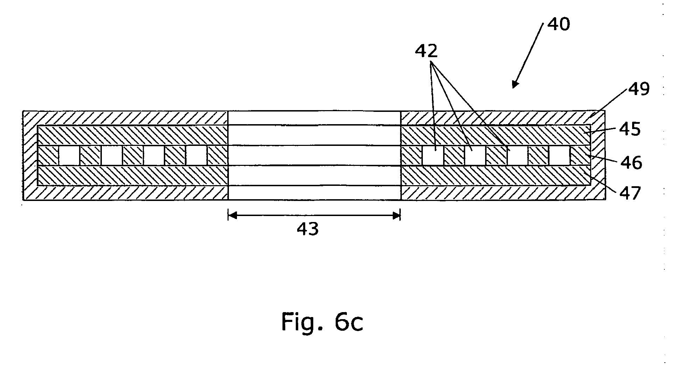

Figure 1 shows an exemplary reactor unit 10 of the invention in exploded view. Shown are a filtering plate 40, an aeration plate 50 as well as two discs 12. The filtering plate 40 and the aeration plate may be of a first permeable material, for example a sintered material, such as ceramic material or a sintered metal material, or a polymer material. The polymer material may have chemically or otherwise formed pores of appropriate size in order to let an appropriate amount of fluid flow through it. The filtering plate 40 comprises a filtration membrane (see figure 6c) on at least the side of the plate 40 directed towards the disc 12. The material of the filtering plate 40 may be identical to that of the aeration plate, except from the presence of the filtration membrane on the filtering plate.

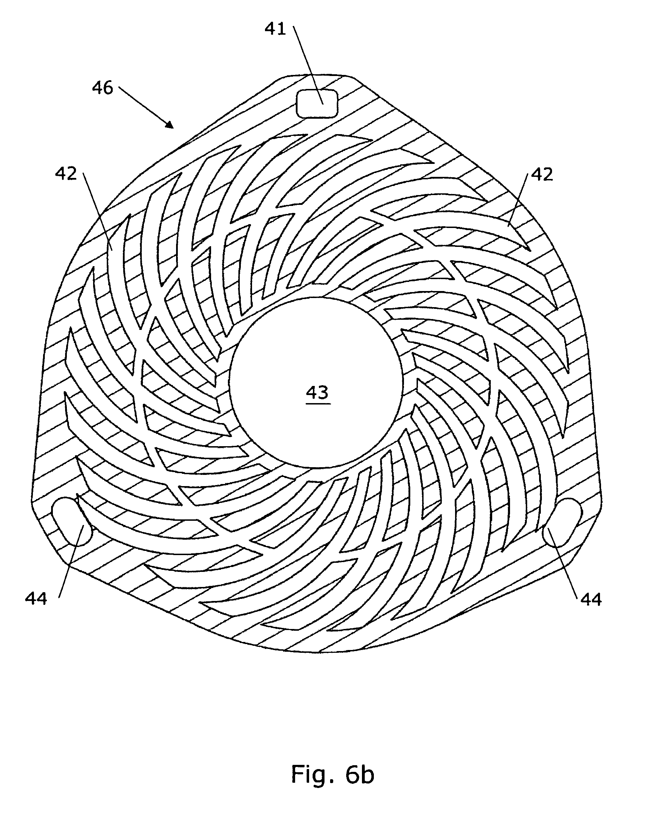

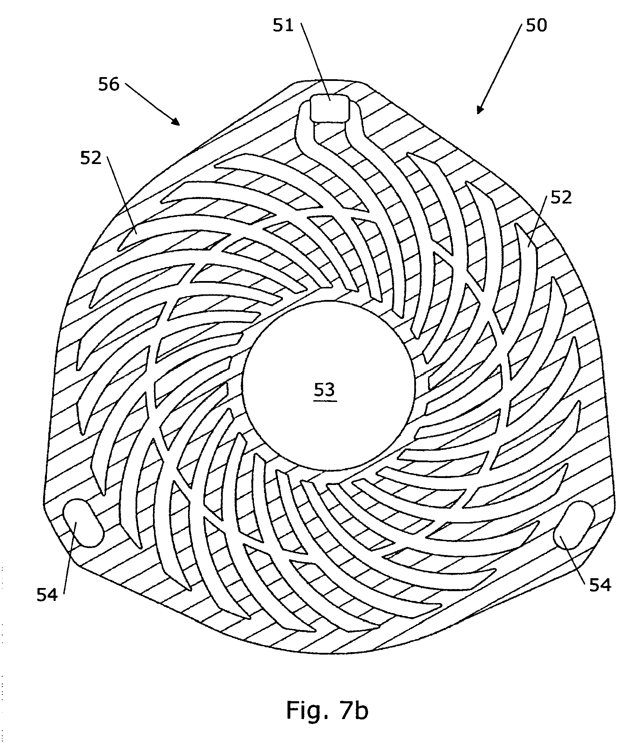

Each of the filtering and aeration plates 40, 50 has a central hole 43, 53 as well as three openings 41, 44, 51, 54. The filtering plate 40 moreover has a pattern of internal cavities 42 (see figures 6b-6c) connected to at least one of the openings 44 for distributing liquid permeated into the inside of the plate to the opening 44. The aeration plate 50 similarly has a pattern of internal cavities 52 (see figures 7b-7c) connected to at least one opening 51 for distributing air inlet into the opening 51 into and within the plate 50.

The wording "internal cavities" is meant to denote that the cavities lie within the material of the plate and that, apart from a connection by permeation through the material of the plate, their only connection to the outside of the plate 40, 50 is a connection to an opening 51, 44 of the plate.

The reactor unit 10 shown in figure 1 moreover comprises two discs 12, arranged in parallel to the plates 40, 50. The material of the disc 12 may be a plastic material or a metal, e.g. stainless steel. However, other materials may be conceivable. It is moreover possible that the disc material is identical to the first material.

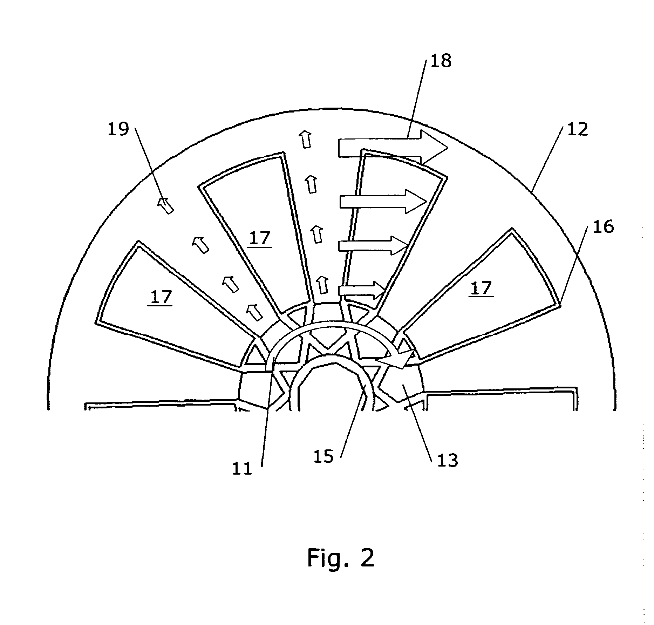

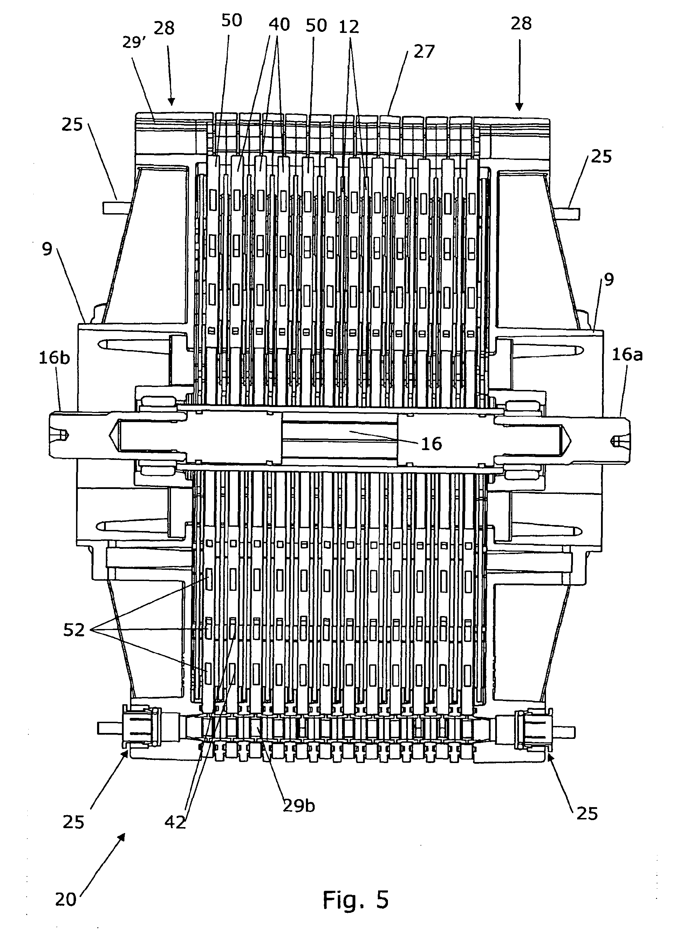

Figure 1 is an exploded view; when the reactor unit is assembled the plates 40, 50 and the discs 12 are arranged to be placed close to each other, leaving only small gaps in-between (see figure 5). The distance between the disc 12 and each of the plates 40, 50 may be in the order of millimetres. The reactor unit 10 moreover comprises means for rotating the disc 12, viz. a shaft 16 arranged for extending through a central hole 15 of the disc 12 and through the central hole 43, 53 of the plate 40, 50. The inner diameter of the central holes 43, 54 of the plates 43, 53 is larger than the outer periphery of the shaft 16 so that the shaft will not touch the plates 40, 50, when the reactor unit is assembled. However, the inner diameter of the central hole 15 of the disc 12 fits snugly together with the outer periphery of the shaft 16; moreover, the central hole 15 has an angular shape so as to obtain a firm grip with the shaft 16 (see Fig. 2) having a corresponding angular shape, so that rotation of the shaft 16 provides rotation of the disc 12. The plates 40, 50 are held stationary within the reactor unit 10, whilst the disc 12 is rotated. When the reactor unit is immersed or submerged in liquid, the rotation of the disc 12 provides a flow of liquid across the surface of the plates 40, 50 when the reactor device 10 is submerged or immersed in a liquid, as will be explained below. The appropriate rate or speed of rotation of the disc 12 may depend on the pressure inside the reactor, the desired volume of liquid to be treated, the desired size of air bubbles in the liquid, etc.

Typically the disc is rotated at a rate between zero and 1500 revolutions per minute, for example at about 100, 250, 350, 500, 750, 1000 revolutions per minute. However, these speeds of rotation are only exemplary and should not be taken as limiting the invention, in that other numbers of revolutions per minute may be conceivable.

In the embodiment shown in the figures, each plate 40, 50 comprises three openings 41, 44, 51, 54. Figure 1 moreover shows two outlet pipes 29a and an inlet pipe 29b. The outlet pipes 29a are meant to pass filtered liquid or permeate from outlet openings 44 of the filtering plates 40 and the inlet pipes 29b are meant to pass air into the inlet openings 51 of the aeration plates 50.

Thus, the pipes 29a may be connected to the outlet openings 44 of the filtering plates 40 in order to provide a fluid tight connection for filtered liquid from the outlet opening 44 of the filtering plate 40 to a hole or outlet 29' of one of the end pieces 28. Moreover, the pipes 29b may be connected to the openings 51 of the aeration plates 50 in order to provide an air tight connection for inlet air from a hole or inlet 29' of one of the end pieces 28 to the inlet opening 41 of the aeration plates 40.

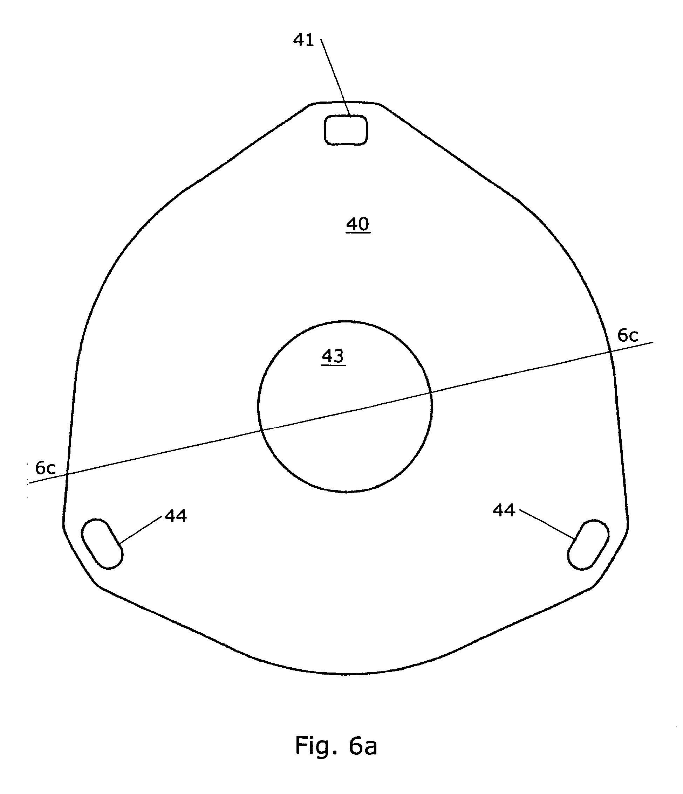

In the case of a filtering plate 40, one of these openings, viz. the upper opening 41 in the figures 6a-6b, is meant to carry one or more pipes 29b comprising air. The air in these pipes does not come into contact with the filtering plate 40; instead the piping is lead through the opening 41 without outletting any air into the opening 41. The opening 41 is closed off by a non-permeable material so that the material of the filtering plate is not permeable to air or liquid within the periphery of the opening 41. The other two openings 44 are intended for receiving liquid permeate into and passed from the internal cavities of a filtering plate 40 or from one or more pipes 29a from other plates of the reactor unit 20.

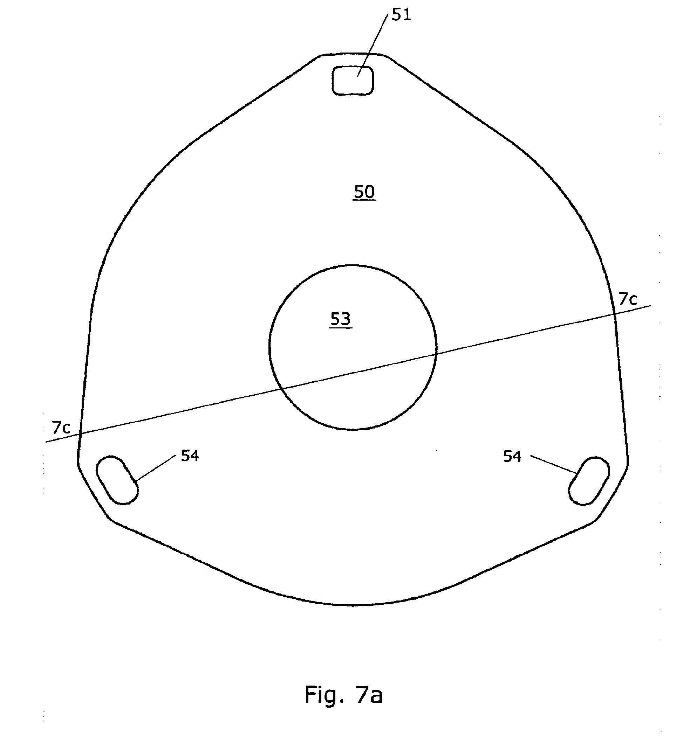

Similarly, in the case of an aeration plate 50, one of the openings, viz. the upper opening 51 in the figures 7a-7b, is meant to carry one or more pipes 29b comprising air. The air in these pipes is inlet into the interior of the aeration plate 50 via the opening 51. The other two openings 54, viz. the lower two openings in the figures 7a-7b, are intended for passing liquid via pipes 29a through the openings 54 without getting into contact with the material or the interior of the aeration plate 50. The pipes 29a are lead through the opening 54 without receiving any liquid or gas from the interior of the plate 50. The lower openings 54 of the aeration plate 50 are closed off so that the material of the aeration plate 50 is not permeable to gas or liquid within the periphery of the openings 54.

Figure 2 shows an exemplary disc 12 of a reactor unit 10 of the invention. The disc 12 has a central hole or opening 15 which has an angular shape so as to provide a firm grip with a similarly shaped angular shaft 16 as explained in connection with figure 1. Moreover, the disc 12 comprises a plurality of through-going holes or openings 13 through which air or liquid may easily flow. The disc 12 moreover comprises a plurality of surface configurations 16. When the reactor unit 10 is submerged or immersed in a liquid and the disc 12 is rotated, the surface configurations 16 are arranged for creating a flow of the liquid in a direction substantially in parallel to the disc 12. The term "parallel to the disc" is meant to denote "parallel to the surface of the disc 12, where the surface lies in the plane of the drawing of figure 2". Thus, the surface configurations 16 are meant to provide a flow parallel to the plane of the drawing of figure 2. This flow has radial components, also denoted recirculation flow, indicated by the arrows 19, as well as cross flow components indicated by the arrows 18. As indicated by the size of the arrows 18 and 19, the cross-flow components may be relatively large in comparison with the recirculation flow components. Since the disc 12 is meant to be arranged close to a plate 40, 50 of the reactor unit 10, similar flow components arise at the surface of the plate 40, 50. Thus, the rotation of the disc 12 may create a relatively large cross-flow of the liquid to be treated at the surface of the plate 40, 50 of the reactor unit 10. This provides an efficient treatment of liquid.

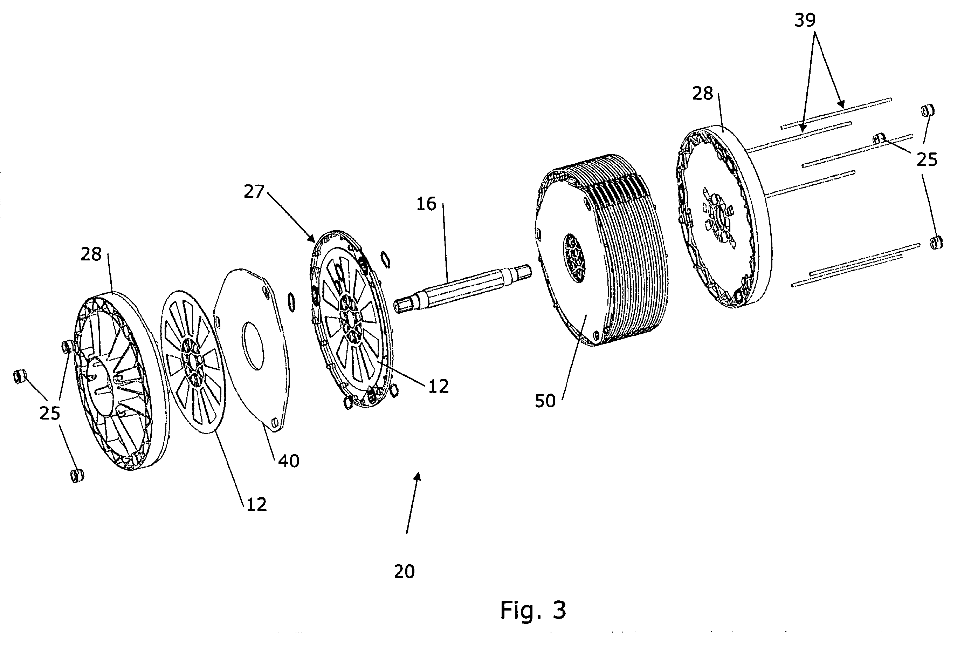

Each of the surface configurations may be a recess in or an elevation on the disc 12. Alternatively, the surface configurations may be through-going holes or openings (see figure 1 or 3, wherein the parts 17 of the disc 12 surrounded by the surface configurations have been cut out) or projections extending from the surface of the disc 12. The surface configuration may be any appropriate combination of the above for providing a flow of a liquid. The parts 17 of the disc 12 surrounded by the surface configurations may be cut out.

Figure 3 shows an alternative reactor unit 20 of the invention in exploded views. Figure 3 shows a reactor unit 20 comprising a number of filtration plates 40, number of aeration plates 50 and a number of discs 12. The reactor unit 20 comprises both one or more filtering plates 40 and one or more aeration plates 50, so that filtration and aeration is provided in each reactor unit. In the following, the configuration of a number of filtering plates 40 and a number of aeration plates 50 within the reactor unit 20 is described. It should be understood, that this is only for descriptive purposes, and that the reactor unit is not meant to be limited to this configuration.

The filtering plates 40 are suitable for filtering a liquid comprising solid components, such as particles of solid material. The plate 40 comprises a filtration membrane (see figure 6c) covering the surface of the plate 40. The filtration membrane of the plate 40 for filtering off solid particles in the liquid may be a sintered material, such as a metal or a ceramic, or a polymer material. When the plate 40 is of ceramic material, the medium pore size of the ceramic material may for example lie between 0.1 µm and 5 µm, or between 0.5 µm and 4 µm, or between 1.5 µm and 2.5 µm. It should be noted that these medium pore sizes are only exemplary and should not be taken as limiting the invention, in that ceramic material for use in for aeration plates and having any appropriate medium pore size providing bubbles of air of the required size may be conceivable. Moreover, as an example, the medium pore size of the filtration membrane may for example lie in the range from 5 to 100 nm. Again, this example should not be taken as limiting the invention, in that ceramic material for use in filtration membranes and having any appropriate medium pore size providing the required filtration of liquid may be conceivable.

The liquid to be filtered is inlet into the reactor unit 20, typically under pressure, wherein the filtering plates 40 may filter particles present in the liquid from the permeate, viz. the filtered liquid without the filtered off solid component. The permeate may enter into the internal cavities of the filtering plate 40, whilst the porosity of the filtering plate 40 is chosen so as to hinder the solid particles in the liquid to pass through the material of the filtering plate 40. The filtered liquid, i.e. the permeate, will flow into the internal cavities of the filtering plate 40 and will outlet the plate through an outlet opening 44 thereof.

The aeration plates 50 are suitable for aerating any liquid, e.g. a liquid comprising solid components, such as particles of solid material. The liquid to be aerated is inlet into the reactor unit 20 so that the aeration plates 50 are submerged or immersed in the liquid. Air under pressure is inlet into the air inlet opening 51 of the aeration plate 50, the air is distributed within the internal cavities 52 of the plate 50 and permeates through the material of the plate 50. The discs 12 are rotated by rotating the shaft 16 and a flow of liquid is thus provided across the surface of the aeration plates 50. The flow facilitates the detachment of air from the surface of the aeration plate 50, whereby small or very small air bubbles are formed on the surface of the aeration plate 50 and are released into the liquid. The size of the air bubbles detached from the aeration plate 50 depends upon the porosity of the plate 50, the pressure of the air as well as the speed of rotation of the disc 12. Since the reactor unit 20 comprises both filtering plates 40 and aeration plates 50, the reactor unit 20 provides both filtration and aeration of the liquid.

One of the discs 12 is shown as held within the inner periphery of a spacer 27. The disc 12 may rotate or pivot freely within the spacer 27. The spacer 27 is arranged to fixate the disc 12 in the direction of the shaft 16 so that the disc 12 is hindered from moving in the longitudinal direction of the shaft 16. Each disc 12 of the reactor unit 20 of figure 3 is held within a similar spacer so that plates 40, 50 and the discs 12 are held in the appropriate distance from each other in order to facilitate the rotation of the discs and the filtration or aeration of liquid by means of the plates 40, 50.

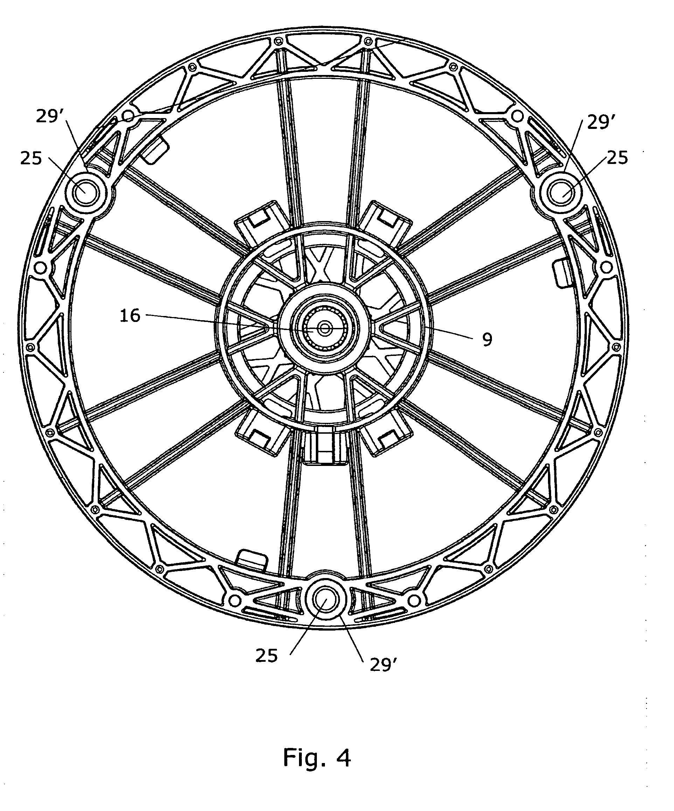

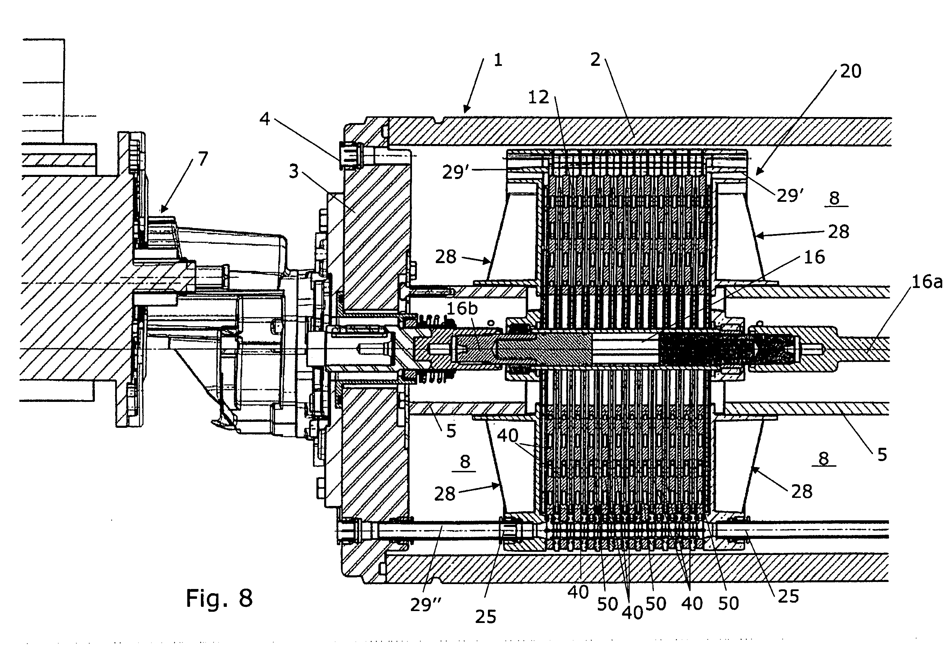

Also shown in figure 3 are end pieces 28 of the reactor unit 20. The end pieces 28 of the reactor unit 20 comprise a central hole for insertion of a shaft 16, 16a, 16b (see figures 5 and 8). The shafts 16a, 16b may be in one piece with the shaft 16 or they may be arranged for fixation to the shaft 16. Moreover, the end pieces 28 comprise through-going holes 29' (see figure 4) through which pipes 39 may extend.

The outlets or holes 29' of the end piece 28 are connected to piping (not shown) by means of tightening parts 25.

The reactor unit 20 is suitable for use under pressure, i.e. as a closed system that operates under pressure from a pump, for treating a liquid comprising solid components, such as particles of solid material. The liquid to be treated is inlet under pressure towards the one or more filtering plates 40 and one or more aeration plates 50. The membrane of the filtering plates 40 filters particles in the liquid from the permeate, viz. the filtered liquid without the filtered off solid component. The permeate may enter into the internal cavities of the filtering plate 40, whilst the porosity of the membrane is chosen so as to hinder the solid particles in the liquid to pass through the membrane. The filtered liquid, i.e. the permeate, will flow into the internal cavities of the filtering plate 40 and will outlet the plate 40 through an opening or outlet 44 thereof.

As the reactor unit 20 also comprises a number of aeration plates 50, the liquid to be treated is also aerated in the reactor unit 20. Air under pressure is inlet into the air inlet opening 51 of the one or more aeration plate 50 of the reactor unit 20, the air is distributed within the internal cavities 52 of the aeration plates 50 and permeates through the material of the aeration plate 50 to form small or very small air bubbles on the surface of the plate. The size of the air bubbles detached from the plate depends upon the porosity of the aeration plate 50, the pressure of the air as well as the speed of rotation of the disc 12.

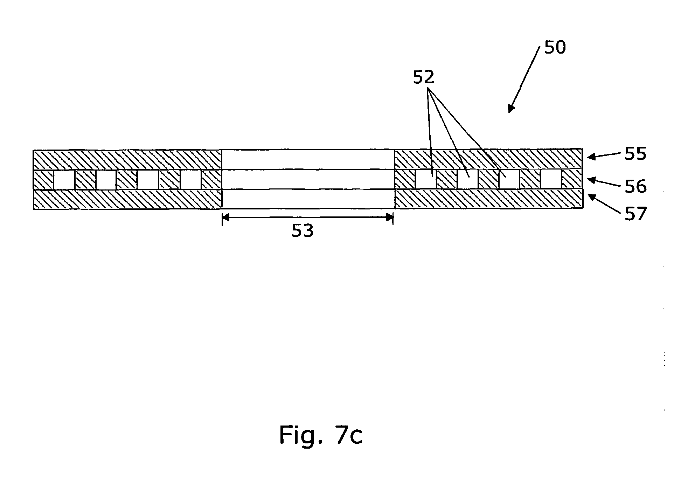

Figure 4 shows a reactor unit of the invention seen from the end piece 28 thereof. The end pieces 28 of the aeration device 20 comprise a central hole through which a shaft 16 may extend. The shaft extending through the central hole of the end pieces 28 may be the shaft 16 of the reactor unit 20, or a shaft 16a, 16b (see figure 7) fastened or fixated to the shaft 16 of the reactor unit 20.

Moreover the end piece 28 comprises through-going openings 29' through which pipes 29a, 29b may extend (see figure 3, 5 or 9). The openings 29' of the end piece 28 are connected to the pipes 29a, 29b (not shown in figure 4) by means of tightening parts 25. Moreover, tightening parts 25 (see figures 3 and 5) may be connected to the pipes 29a, 29b extending through the plates 40, 50 of the reactor unit.

The pipes 29b extending through the openings 41 of the plates 40 and through the inlet openings 51 of the plates may carry air and will provide an airtight connection for air that is inlet through a hole or inlet 29' of the end piece 28 to the air inlet 41 of each aeration plate 40 of the reactor unit. The surface of the openings 41 of the filtering plates 40 are closed off so that no air is inlet into the interior of the filtering plates 40. Similarly, pipes 29a extending through the outlet openings 44 of the plates 40 and through the outlet openings 54 of the plates may carry permeate and will provide an fluid tight connection for the permeate which has reached the outlet openings 44 from within the internal cavities of the filtering plates. The permeate is led from the outlet opening 44 via pipes 29a to the hole or opening 29' of the end piece 28 of the reactor unit. The surface of the openings 54 of the aeration plates 50 are closed off so that no permeate enters into the interior of the aeration plates 50.

Moreover, a central circular connection part 9 is shown. The connection part 9 may be connected to tubing or pipe (not shown) so that the shaft 16a (see figure 5) connected to the shaft 16 inside the reactor unit may be isolated from fluid.

Figure 5 is a cross-section of the reactor unit 20 of figure 3 in an assembled or mounted state. From figure 5 it can be seen that the peripheries of the spacers 27 are adjacent to each other or to the periphery of one of the end pieces 28; however, a small gap is left between neighbouring spacers 27 and between the spacer adjacent each of the end pieces 28 and the end piece concerned. Liquid may flow through these gaps. The filtering and aeration plates 40, 50 are held stationary within the reactor unit 20 and pipes 29a, 29b extend through the openings 41, 44, 51, 54 of the plates 40, 50 (only one pipe 29b is shown in figure 5). However, the discs 12 are freely pivotable or rotatable within the reactor unit 20 in that each disc 12 rest on the shaft 16 and within a spacer 27, pivotable or rotatable upon rotation of the shaft 16, and in that the pipes 29a, 29b are arranged outside the diameter of the discs 12. The ratio between filtering and aeration plates in the reactor unit 20 is three filtering plates 40 to each aeration plate 50. Each of the filtering plates 40 of the reactor unit 20 comprises cavities 42 (see also figures 6a-6c), and each of the aeration plates 50 of the reactor unit 20 comprises cavities 52 (see also figures 7a-7c).

It is stressed that the ratio of three filtering plates 40 to one aeration plate 50 is only exemplary and should not be taken as limiting the invention, in that any appropriate rate between the number of filtering and aeration plates may be conceivable; such rates may depend upon the liquid to be treated.

Figures 6a to 6c show views of an exemplary filtering plate 40 of a reactor unit according to the invention. Figure 6a shows that the filtering plate 40 has a central opening 43 through which a shaft may extend. The shaft 16 used in conjunction with the filtering plate 40 should be smaller than the central opening 43 so that the shaft 16 may extend through the opening 43 without touching or being in connection with the filtering plate 40. The filtering plate 40 moreover comprises three openings 41, 44 close to the periphery of the plate 40. The openings 41, 44 may be arranged for being connected to tubing, a conduit or a pipe for outletting fluid as described in connection with figure 6b. As described above, in the embodiment shown in figure 6b, only two of the openings, viz. the lower openings 44 as shown in figure 6b, are connected to piping for outletting liquid from the internal cavities 42 of the filtering plate 40 through the openings 41. The other opening 41 may be used for passing tubing carrying air through the filtering plate 40 without coming into contact with the interior of the filtering plate 40. It should be noted, that another number of openings 41, 44 is conceivable.

The shape and size of the filtering plate 40 is correlated to the size of the discs 12 of the reactor unit, so that piping 29a, 29b may extend through the openings 41 parallel to the shaft 16 (see figure 4 or 5) and continue outside the outer diameter of the discs 12, viz. without touching, being in connection with or hindering the rotation of the discs 12.

Whilst figure 6a shows the filtering plate 40 as seen from above or from below, viz. from the outside, figure 6b shows an internal layer 46 of the filtering plate 40, which is not normally visible to the eye, unless the plate is separated into parts. The layer 46 comprises a pattern of interconnected cavities 42. The pattern of cavities 42 is connected to two outlet openings 44 through the layer 46. These two outlet openings 44 are in fluid connection with pipes or piping 29a carrying filtered liquid from the filtering plates 40. The third opening 41 is closed away from the pattern of cavities 42 by a non-permeable material (not shown) so that no liquid from the pattern of cavities 42 may enter into this closed-off opening 41. This closed-off opening 41 may be used for letting tubing through the plate 40 without being in fluid connection with the plate 40. This is useful for throughput of gas or air, when the filtering plate 40 is used in a reactor unit also comprising aeration plates 50.

Figure 6c shows a cross-section through the filtering plate 40 along the line 6c-6c in figure 6a. It can be seen that the filtering plate 40 comprises three layers, viz. a bottom layer 47, an internal layer 46, being the layer shown in figure 6b, and an upper layer 45.

Moreover, a filtration layer 49 surrounds the layers 45, 46, 47. The drawing is not to scale, in that the filtration layer 49 typically is relatively thinner than shown. Typically, the filtration layer 49 is a thin membrane layer, e.g. an ultra filtration layer, a micro filtration layer, a nano filtration layer or any other layer providing appropriate mechanical filtration. The material of the membrane layer 49 may be a sintered material, such as a sintered metal or a ceramic material, or a porous film. The layers 45, 46 and 47 may be seen as a carrier of the filtration membrane layer 49. The filtration layer 49 covers the outside of the plate 40. The opening 41 is closed-off by a non-permeable layer so that no fluid may exit from the internal cavities 42 through the material of the plate 40 via the surface of the opening 41.

Figures 7a to 7c show views of an exemplary aeration plate 50 of a reactor unit according to the invention. Figure 7a shows that the aeration plate 50 has a central opening 53 through which a shaft may extend. The shaft 16 used in conjunction with the aeration plate 50 should be smaller than the central opening 53 so that the shaft 16 may extend through the opening 53 without touching or being in connection with the plate 50. The aeration plate 50 moreover comprises three openings 51, 54 close to the periphery of the plate 50. In the embodiment shown in the figures, one of the openings, viz. the topmost opening 51, is arranged for being connected to tubing, a conduit, piping or a pipe for inletting air into the internal cavities of the aeration plate 50 as described in connection with figure 7b. The other two openings 54 are used for passing tubing carrying liquid through the aeration plate 50 without coming into contact with the interior of the aeration plate 50. It should be noted, that another number of openings 51, 54 is conceivable.

The shape and size of the aeration plate 50 is correlated to the size of a discs 12 of the reactor unit, so that piping 29a, 29b may extend through the openings 31 parallel to the shaft 16 (see figure 4 or 5) and continue outside the outer diameter of the discs 12, viz. without touching, being in connection with or hindering the rotation of the discs 12. Moreover, the shape and size of the aeration plate 50 is preferably substantially identical to the shape and size of the filtering plate 40.

Whilst figure 7a shows the aeration plate 50 as seen from above or from below, viz. from the outside, figure 7b shows an internal layer 56 of the aeration plate 50, which is not normally visible to the eye, unless the plate is separated into parts. The layer 56 comprises a pattern of interconnected cavities 52. The pattern of cavities 52 is connected to an opening 51 through the layer 56, viz. the topmost opening as seen in the orientation of figures 7a and 7b. The two other openings 54 are closed away from the pattern of cavities 52 by non-permeable material, so that no air from the pattern of cavities 52 may enter into these closed-off openings 54. The closed-off openings 54 may be used for letting tubing through the aeration plate 50 without being in connection with the aeration plate 50. This might e.g. be useful for throughput of liquid, if the aeration plate is used in conjunction with filtering plates 40 in the reactor.

Figure 7c shows a cross-section through the plate 50 along the line 7c-7c in figure 7a. It can be seen that the plate comprises layers, viz. a bottom layer 57, an internal or middle layer 56, which is the layer shown in figure 7b, as well as an upper layer 55 as seen in the direction of the orientation of figure 7c.

In operation of the reactor unit, each of the aeration plates 50 are arranged to be placed adjacent to, but with a distance to, a disc 12 as seen in figures 1 and 3. Air or gas under pressure is directed to each aeration plate 50 through the inlet opening 51. Liquid is inlet into the reactor unit, so that the filtering plates 40 and the aeration plates 50 are submerged or immersed into liquid. The pressure difference between the outside and the inside of the each aeration plate 50 may be any pressure difference greater than zero, i.e. the pressure inside the aeration plate 50 must be greater than the pressure outside the aeration plate 50. The greater the pressure difference, the more air may permeate through the material of the aeration plate 50. The pressure difference between the inside and the outside of the aeration plate 50 of the reactor unit may e.g. 1, 3, 4, 5, 6 bar, but of course other values are conceivable. Moreover, the filtration membrane layer 49 of each filtering plate 40 is arranged to be placed adjacent to, but with a distance to, a disc 12 as seen in figures 1 and 3. Liquid under pressure is directed to the filtering plate 40 through openings in the disc 12. The pressure difference between the outside and the inside of the filtering plate 40 may be any pressure difference greater than zero, i.e. the pressure outside the filtering plate 40 must be greater than the pressure inside the filtering plate 40. The greater the pressure difference, the more liquid may be filtered. The pressure difference may e.g. 1, 3, 4, 5, 6 bar, but of course other values are conceivable.

The liquid may comprise solid particles which is to be filtered off from permeate liquid. The disc 12 may rotate to provide a cross flow of the liquid along the surface of the plates 40, 50 as seen in figure 2. The filtration membrane layer 49 is permeable to liquid, but has a medium pore size chosen so as to filter off relevant solid particles in the liquid. The permeate enters through the material of the filtration membrane layer 49, through the upper layer 45 of the plate and into cavities 42 in the pattern of cavities. From the cavities, the permeate flows into the openings 41 through the plate from which it is led away from the plate by tubing, conduits, piping or pipes 29a (see figure 3 or 4). The permeate may be outlet from the plate to an outlet of the reactor unit for collection thereof.

The discs 12 may rotate to provide a cross flow of the liquid along the surface of each of the plates 40, 50 as seen in figure 2.

The material of the aeration plates 50 is permeable to air and has a medium pore size chosen so as to facilitate provision of air bubbles of appropriate size. The air is inlet into the plate 50 through its inlet opening 51 by tubing, conduits, piping or pipes 29b (see figure 3 or 5).

It should be noted that the air used may be atmospheric air or a gas such as pure oxygen. Atmospheric air may be advantageous even though it only comprises about 20% oxygen due to lower acquisition costs.

Exemplary medium pore size of the ceramic material of the plates 40 and 50 may lie between 0.1 µm and 5 µm, or between 0.5 µm and 4 µm, or between 1.5 µm and 2.5 µm. Moreover, as an example, the medium pore size of the filtration membrane 49 of the filtering plate 40 may for example lie in the range from 5 to 100 nm. It is stressed that these medium pore sizes are only exemplary and should not be taken as limiting the invention, in that any material for use in aeration plates 50 and having any appropriate medium pore size providing bubbles of air of the required size may be conceivable as well as any material for use in filtration membranes 49 and having any appropriate medium pore size providing the required filtration of liquid may be conceivable.

Figure 8 shows a cross-section of an exemplary reactor unit 20 inside a closed reactor 1. The reactor may comprise a number of reactor units 20, even though only one such reactor unit 20 is shown.

The reactor unit 20 comprises a plurality of plates 40, 50 as well as a plurality of discs 12 and two end pieces 28. As described above, the reactor unit 20 comprises at least one filtering plate 40 and at least one aeration plate 50. For example 9 filtering plates 40 and three aeration plates 50 might be used; however, other combinations are also conceivable.

The plates 40, 50 are stationary within the reactor unit 20 and within the reactor 1. The discs 12 are placed inside the reactor unit 20 so as to be free to rotate within the reactor unit 20. Between any two neighbouring plates 40, 50 within the reactor unit 20 a disc 12 is situated, held within a spacer 27 (see figure 3 or 5). A shaft 16 extends through the filtering and aeration plates 40, 50 and the discs 12 of the reactor unit 20, viz. through the central hole 43, 53 of each plate 40, 50 and through the central hole 15 of each disc 12. The ends of the shaft 16 through the reactor unit 20 are connected to shafts 16a, 16b. The shaft 16b extends in the longitudinal direction of the reactor 1 and may be connected to a shaft through another reactor unit (not shown). The opposite end of the shaft 16 is connected to another shaft 16a which in turn is connected to a motor 7 for driving or rotating the shafts 16, 16a and 16b. The shafts 16a and 16b lie within a central pipe 5 in so as to be isolated from liquid in the reactor. Each central pipe 5 is connected to the connection part 9 of the corresponding end piece 28. Liquid to be treated may be led into the parts 8 of the reactor through an inlet (not shown).

Liquid inlet into the reactor 1 under pressure will flow through the space or gap between the reactor unit 20 and the wall 2 of the reactor 1. If more than one reactor unit 20 is present in the reactor 2, the liquid will flow along the side of the reactor 1 until the reactor unit which is placed farthest back in relation to the motor 7 connected to the reactor 1. From here, the liquid 8 will enter into the reactor units 20 in the reactor 1. Liquid 8 may enter through the end piece 28 of the reactor unit, through holes of the discs 12 and through the central holes 43, 53 of the plates 40, 50 of the reactor unit 20. Filtrated liquid, i.e. permeate, may flow into the internal cavities 42 of a filtering plate 40 (see figures 6a-6c), to the outlet openings 44 of the filtering plate 40 and into pipe or tubing 29a (see figure 3) connected to the openings 31 of the plates and to outlet means 4 in an end wall 3 of the reactor 1, via pipe or tubing 29" connected to the pipe or tubing 29a inside each reactor unit 20.

Air under pressure is inlet into the aeration plates 50 of the reactor unit 20. The air will flow into the internal cavities 52 of the plates 50 (see figures 7a-7c) and will permeate through the material of the plates 50 into the liquid in the reactor 1. The air is inlet into the plates 50 via pipe or tubing 29b (see figure 3) connected to the inlet openings 51 of the aeration plates 50 and to inlet means 4 in an end wall 3 of the reactor 1, via pipe or tubing 29" connected to the pipe or tubing 29b inside each reactor unit 20.

The reactor 1 may e.g. be used as a purification reactor for treatment of waste water. The reactor units 20 comprising filtering plates 40, aeration plates 50 and rotatable discs 12 may be used in an activated sludge process for the treatment of sewage or waste water. In such an activated sludge process, atmospheric air or pure oxygen is forced into raw sewage combined with organisms to develop a biological floc which reduces the organic content of the sewage. The biological floc may be filtered by the filtering plates 40 of the reactor units. During use, the air under pressure inlet into the aeration plates 50 will hinder any liquid from entering into the internal cavities 52 of the aeration plates 50 from the outside surface of the aeration plates.

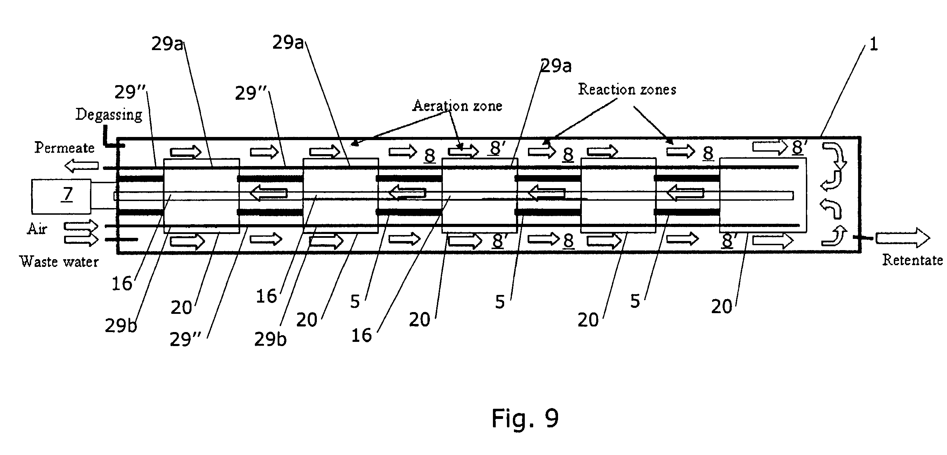

Figure 9 shows a reactor 1 comprising five reactor units 20. Each of these five reactor units 20 comprises a first number of filtering plates 40 and a second number of aeration plates 50. Of course, the number of filtering and aeration plates 40, 50 need not be identical for each reactor unit. Moreover, the number of reactor units 20 need not be five, but could be any other appropriate number, typically in the range from one to 10 reactor units 20 within a reactor 1. Furthermore, the reactor units 20 within a reactor 1 need not be identical; thus, the reactor 1 might comprise one large reactor unit and a plurality of smaller reactor units. Even reactor units 20 with identical number of plates need not be identical, in that different numbers of filtering plates 40 and aeration plates 50 are conceivable for reactor units 20.

Liquid under pressure inlet into the reactor 1 will fill the reactor and flow through the space or gap 8' between each reactor unit 20 and the wall 2 of the reactor 1.The liquid will flow along the side of the reactor 1 until the reactor unit 20 being placed farthest back in relation to the motor 7 connected to the reactor 1. From here, the liquid 8 will enter into this reactor unit 20 being placed farthest back in relation to the motor 7 of the reactor. Filtrated liquid, i.e. permeate, will flow into the internal cavities 42 of a filtering plate 40 (see figures 6a-6c), to the outlet openings 44 of the filtering plate 40 and into pipe or tubing 29a (see figure 3) connected to the openings 44, 54 of the plates 40, 50 and to outlet means 4 (see figure 8) in an end wall 3 of the reactor 1, via pipe or tubing 29" connected to the pipe or tubing 29a inside each reactor unit 20.

Air under pressure is inlet into the aeration plates 50 of the reactor unit 20 from a source of air (the arrow denoted "Air" in figure 9). The air will flow into the internal cavities 52 of the plates 50 (see figures 7a-7c) and will permeate through the material of the plates 50 into the liquid 8 in the reactor 1. The air is inlet into the plates 50 via pipe or tubing 29b (see figure 3) connected to the inlet openings 51 of the aeration plates 50 and to inlet means 4 in an end wall 3 of the reactor 1, via pipe or tubing 29" connected to the pipe or tubing 29b inside each reactor unit 20.

The reactor 1 may e.g. be used as a purification reactor for treatment of waste water. The reactor units 20 comprising filtering plates 40, aeration plates 50 and rotatable discs 12 may be used in an activated sludge process for the treatment of sewage or waste water. In such an activated sludge process, atmospheric air or pure oxygen is forced into raw sewage combined with organisms to develop a biological floc which reduces the organic content of the sewage. The biological floc may be filtered by the filtering plates 40 of the reactor units 20.

At start-up raw sewage or waste water combined with bacteria is inlet into the reactor 1. The bacteria breed or reproduce by use of oxygen. In the area 8' of the reactor 1 in the vicinity of each reactor units, the liquid may be aerated by means of the air outlet as small or very small air bubbles from the aeration plates 50. These areas 8' are denoted aeration zones. The areas inside the reactor denoted 8 in figure 9 are where the bacteria of the liquid may react. These areas are denoted reaction zones. Whenever necessary or appropriate, retentate may be outlet through the outlet denoted retentate in figure 9. The reactor 1 comprises a gas outlet for degassing, which is useful if a composite gas, e.g. such as atmospheric air, is used for aerating the liquid.

The treatment of the waste water or sewage may be regulated by changing the pressure of the inlet liquid, changing the pressure of the inlet air and by changing the speed of rotation of the discs. The pressure inside the reactor influences the amount of air that may be dissolved in the liquid inside the reactor. The speed of rotation of the discs influences the flow across the aeration plates and thus size of the generated air bubbles, which in turn influences the speed of reaction of bacteria within the liquid in the reaction zones.

The configuration and number of reactor units 20 in the reactor 1 may be adapted to the specific needs, viz. the liquid to be treated, the specific treatment of the liquid, the treatment speed, etc. Due to similar sizes and shapes of the filtering plates 40 and the aeration plates 50, each reactor unit may comprise a variety of combinations of the plates 40, 50 and the each of the plates 40, 50 in each reactor unit may easily be exchanged with the other type of plates 40, 50. For example, it has turned out that when the reactor unit 20 being placed farthest back in relation to the motor 7 connected to the reactor 1 is relatively large and the remaining reactor units are relatively smaller, a large flow of liquid through the reactor 1 may be obtainable. Thus, the measure of filtering compared with the measure of aeration may be designed for each liquid to be treated. This provides a very flexible reactor unit and reactor system. The liquid to be treated is moreover aerated decentralized, which may provide a highly efficient treatment of the liquid within the reactor.

Although the present invention has been described in connection with the specified embodiments, it should not be construed as being in any way limited to the presented examples. For example, even though the invention has been described in connection with treatment of a liquid, it could also be appropriate for treatment of any fluid, i.e. also for treatment of gasses carrying solid materials. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention.

## Claims

1. A reactor unit (10; 20) for treatment of a liquid, said reactor unit (10; 20) comprising:
- a first number of parallel filtering plates (40) of a first material, said first material being permeable to liquid, each filtering plate (40) having outlet opening (44) for outletting liquid which has permeated into the plate, where each filtering plate (40) of the first number of filtering plates is arranged to be stationary within the reactor unit:
- a second number of aeration plates (50) of a second material, said second material being permeable to air, each aeration plate (50) having inlet opening (51) in connection with a gas or air source for inletting gas or air, said aeration plate(s) (50) being placed in parallel to the filtering plate(s), where each aeration plate (40) of the second number of aeration plates is arranged to be stationary within the reactor unit;
- at least one disc member (12) of a disc material,
wherein
- each of said at least one disc member (12) is arranged to be placed adjacent to a filtering plate (40) or an aeration plate (50), but leaving a gap between said filtering plate (40) or aeration plate (50) and the disc member, and in parallel to said filtering and aeration plates (40, 50); and
- means for rotating (7; 16) the at least one disc member around a central axis through the at least one disc member (12).

2. A reactor unit (10; 20) according to claim 1, further comprising:
- at least one outlet pipe (29a) arranged to extend through an outlet opening (44; 54) in each of the first number of filtering plates (40) and each of the second number of aeration plates (50), where the interior of the at least one outlet pipe (29a) is in fluid connection with an outlet opening (44) in the at least one filtering plates (40) through which the at least outlet pipe (29a) extend(s);
- at least one air inlet pipe (29b) for connection to said source of gas or air,said at least one air inlet pipe (29b) being arranged to extend through an inlet opening (41; 51) in each of the first number of filtering plates (40) and each of the second number of aeration plates (50), where the interior of the at least one inlet pipe (29b) is in air tight connection with an inlet opening (51) in the at least one aeration plates (50) through which the at least inlet pipe (29b) extend(s).

3. A reactor unit (10; 20) according to claim 1 or 2, wherein each of the first number of said filtering plates (40) comprises a pattern of internal cavities (42) connected to the outlet means for distributing liquid permeated into the inside of the plate to the outlet means of the plate.

4. A reactor unit (10; 20) according to any of the claims 1 to 3, wherein each of the second number of said aeration plates (50) comprises a pattern of internal cavities (52) connected to the inlet means for distribution of air inlet inside the plate.

5. A reactor unit (10; 20) according to any of the claims 1 to 4, wherein said first material and/or said second material comprise a sintered material or a polymer material.

6. A reactor unit (10; 20) according to claim 5, wherein the sintered material is a ceramic or metal material.

7. A reactor unit (10; 20) according to any of the claims 1 to 6, wherein the material of the at least one disc member (12) comprises a plastic material or a metal alloy.

8. A reactor unit (10; 20) according to any of the claims 1 to 7, wherein said at least one disc member (12) has (have) a surface configuration (16; 17) arranged for creating a flow of a liquid in a direction substantially in parallel to the disc member (12), when the reactor unit (10; 20) is immersed or submerged in the liquid and the at least one disc member (12) is (are) rotated.

9. A reactor unit (10; 20) according to claim 8, wherein said surface configuration comprises one or more openings through, recesses in or elevations on said at least one disc member (12).

10. A reactor unit (10; 20) according to any of the claims 8 or 9, wherein said surface configuration (16; 17) comprises one or more projections arranged in the direction from the centre to the periphery of the at least one disc member.

11. A reactor unit (10; 20) according to any of the claims 1 to 10, moreover comprising at least one spacer (27) arranged to hold a disc (12) member pivotally within the periphery thereof.

12. A reactor unit (10; 20) according to any of the claims 1 to 11, moreover comprising:
- a shaft (16) extending through a central hole of each of said at least one disc member (12), where the shaft (16) comprises means for making said at least one disc rotate.

13. A reactor unit (10; 20) according to any of the claims 1 to 12, wherein the outlet means of each of the filtering plates (40) of the reactor unit is/are in sealed liquid connection with the outlet means of the other filtering plates (40), if any, of the reactor unit (10; 20).

14. A reactor unit (10; 20) according to any of the claims 1 to 12, wherein the inlet means of each of the aeration plates (50) of the reactor unit is/are in sealed gas connection with the inlet means of the other aeration plates (50), if any, of the reactor unit (10; 20).

15. A reactor system (1) comprising one or more of the reactor units (10; 20) according to any of the claims 1 to 14.

16. A reactor system (1) according to claim 15, further comprising:
- gas inlet means;
- liquid inlet means for inletting liquid to be treated;
- liquid outlet means for outletting treated liquid; and
- motor means (7) for making the at least one disc(s) (12) of each reactor unit (10; 20) rotate.

17. A method of treatment of a liquid in a reactor system (1) according to claim 15 or 16, comprising:
- inletting liquid to be treated into the reactor system (1), wherein said liquid is inlet under a pressure above the atmospheric pressure;
- rotating the at least one disc (12) about a central axis through the disc (12) in order to generate a cross flow of the liquid over the at least one plate of a reactor unit;
- outletting liquid from the outlet means of the reactor;
- withdrawing permeate via the filtration plates (40);
- supplying air to the liquid via the aeration plates (50);
wherein the reactor comprises bacteria arranged for reacting with the liquid to be treated while said liquid to be treated is inside the reactor.

18. Use of reactor unit (10; 20) according to any of the claims 1 to 14 or reactor system (1) according to claim 15 or 16 for cleaning a liquid, preferably for cleaning waste water.

19. Use of reactor unit (10; 20) according to any of the claims 1 to 14 or reactor system (1) according to claim 15 or 16 for culturing bacteria in a liquid.

## Patentansprüche

1. Reaktoreinheit (10; 20) zum Behandeln einer Flüssigkeit, wobei die Reaktoreinheit (10; 20) umfasst:
- eine erste Anzahl paralleler Filterplatten (40) aus einem ersten Material, wobei das erste Material flüssigkeitsdurchlässig ist, wobei jede Filterplatte (40) eine Ablassöffnung (44) zum Ablassen von in die Platte eingedrungene Flüssigkeit aufweist, wobei jede Filterplatte (40) der ersten Anzahl Filterplatten so platziert ist, dass sie innerhalb der Reaktoreinheit ortsfest ist;
- ein zweite Anzahl Belüftungsplatten (50) aus einem zweiten Material, wobei das zweite Material luftdurchlässig ist, wobei jede Belüftungsplatte (50) eine Einlassöffnung (51) in Verbindung mit einer Gas- oder Luftquelle zum Einlassen von Gas oder Luft aufweist, wobei die Belüftungsplatte(n) (50) parallel zu der bzw. den Filterplatte(n) angeordnet ist bzw. sind, wobei jede Belüftungsplatte (40) der zweiten Anzahl Belüftungsplatten so platziert ist, dass sie innerhalb der Reaktoreinheit ortsfest ist;
- mindestens ein Scheibenelement (12) aus einem Scheibenmaterial,
wobei
- jedes des mindestens einen Scheibenelements (12) derart angeordnet ist, dass es neben einer Filterplatte (40) oder einer Belüftungsplatte (50) allerdings mit einem Spalt zwischen der Filterplatte (40) oder Belüftungsplatte (50) und dem Scheibenelement und parallel zu den Filter- und Belüftungsplatten (40, 50) platziert ist; und
- Mittel zum Drehen (7; 16) des mindestens einen Scheibenelements um eine Mittelachse durch das mindestens eine Scheibenelement (12).

2. Reaktoreinheit (10; 20) nach Anspruch 1, weiterhin umfassend:
- mindestens ein Ablassrohr (29a), das derart angeordnet ist, dass es sich durch eine Ablassöffnung (44; 54) in jeder der ersten Anzahl Filterplatten (40) und jeder der zweiten Anzahl Belüftungsplatten (50) erstreckt, wobei das Innere des mindestens einen Ablassrohrs (29a) in Fluidverbindung mit einer Ablassöffnung (44) in der mindestens einen Filterplatte (40), durch die sich das mindestens eine Ablassrohr (29a) erstreckt, steht;
- mindestens ein Lufteinlassrohr (29b) zum Verbinden mit der Gas- oder Luftquelle, wobei das mindestens eine Lufteinlassrohr (29b) derart angeordnet ist, dass es sich durch eine Einlassöffnung (41; 51) in jeder der ersten Anzahl Filterplatten (40) und jeder der zweiten Anzahl Belüftungsplatten (50) erstreckt, wobei das Innere des mindestens einen Einlassrohrs (29b) in luftdichter Verbindung mit einer Einlassöffnung (51) in der mindestens einen Belüftungsplatte (50), durch die sich das mindestens eine Einlassrohr (29b) erstreckt, steht.

3. Reaktoreinheit (10; 20) nach Anspruch 1 oder 2, wobei jede der ersten Anzahl Filterplatten (40) ein Muster aus inneren Hohlräumen (42) aufweist, die zum Verteilen von in das Innere der Platte eingedrungener Flüssigkeit zum Ablassmittel der Platte mit dem Ablassmittel verbunden sind.

4. Reaktoreinheit (10; 20) nach einem der Ansprüche 1 bis 3, wobei jede der zweiten Anzahl Belüftungsplatten (50) ein Muster aus inneren Hohlräumen (52) aufweist, die zum Verteilen von in das Innere der Platte eingelassene Luft mit dem Einlassmittel verbunden sind.

5. Reaktoreinheit (10; 20) nach einem der Ansprüche 1 bis 4, wobei das erste Material und/oder das zweite Material ein gesintertes Material oder ein Polymermaterial umfassen.

6. Reaktoreinheit (10; 20) nach Anspruch 5, wobei das gesinterte Material ein Keramik- oder Metallmaterial ist.

7. Reaktoreinheit (10; 20) nach einem der Ansprüche 1 bis 6, wobei das Material des mindestens einen Scheibenelements (12) ein Kunststoffmaterial oder eine Metalllegierung umfasst.

8. Reaktoreinheit (10; 20) nach einem der Ansprüche 1 bis 7, wobei das mindestens eine Scheibenelement (12) eine Flächenkonfiguration (16; 17) aufweist, die für die Schaffung eines Flüssigkeitsstroms in einer Richtung im Wesentlichen parallel zum Scheibenelement (12) angeordnet ist, wenn die Reaktoreinheit (10; 20) in die Flüssigkeit eingetaucht ist bzw. von dieser geflutet wird und das mindestens eine Scheibenelement (12) gedreht wird.

9. Reaktoreinheit (10; 20) nach Anspruch 8, wobei die Flächenkonfiguration eine oder mehrere Öffnungen, Vertiefungen oder Erhöhungen in dem mindestens einen Scheibenelement (12) umfasst.

10. Reaktoreinheit (10; 20) nach einem der Ansprüche 8 oder 9, wobei die Flächenkonfiguration (16; 17) einen oder mehrere Vorsprünge umfasst, die in der Richtung vom Mittelpunkt zum Umfang des mindestens einen Scheibenelements angeordnet sind.

11. Reaktoreinheit (10; 20) nach einem der Ansprüche 1 bis 10, weiterhin umfassend mindestens ein Abstandsstück (27), das derart angeordnet ist, dass es ein Scheibenelement (12) drehbar innerhalb seines Umfangs hält.

12. Reaktoreinheit (10; 20) nach einem der Ansprüche 1 bis 11, weiterhin umfassend:
- eine Welle (16), die sich durch eine Mittenöffnung jedes des mindestens einen Scheibenelements (12) erstreckt, wobei die Welle (16) Mittel umfasst, die die mindestens eine Scheibe zum Drehen bringen.

13. Reaktoreinheit (10; 20) nach einem der Ansprüche 1 bis 12, wobei das Ablassmittel jeder der Filterplatten (40) der Reaktoreinheit in abgedichteter Fluidverbindung mit den Ablassmitteln der anderen Filterplatten (40) der Reaktoreinheit (10; 20), sofern vorhanden, steht.

14. Reaktoreinheit (10; 20) nach einem der Ansprüche 1 bis 12, wobei das Einlassmittel jeder der Belüftungsplatten (50) der Reaktoreinheit in abgedichteter Gasverbindung mit den Einlassmitteln der anderen Belüftungsplatten (50) der Reaktoreinheit (10; 20), sofern vorhanden, steht.

15. Reaktorsystem (1), umfassend eine oder mehrere der Reaktoreinheiten (10; 20) nach einem der Ansprüche 1 bis 14.

16. Reaktorsystem (1) nach Anspruch 15, weiterhin umfassend:
- Gaseinlassmittel;
- Flüssigkeitseinlassmittel zum Einlassen von zu behandelnder Flüssigkeit;
- Flüssigkeitsablassmittel zum Ablassen von behandelter Flüssigkeit; und
- Motormittel (7) zum Antreiben des mindestens einen Scheibenelements (12) jeder Reaktoreinheit (10; 20) zum Drehen.

17. Verfahren zum Behandeln einer Flüssigkeit in einem Reaktorsystem (1) nach Anspruch 15 oder 16, umfassend:
- Einlassen von zu behandelnder Flüssigkeit in ein Reaktorsystem (1), wobei die Flüssigkeit unter einem Druck oberhalb des Atmosphärendrucks eingelassen wird;
- Drehen der mindestens einen Scheibe (12) um eine Mittelachse durch die Scheibe (12), um eine Querströmung der Flüssigkeit über die mindestens eine Platte einer Reaktoreinheit zu erzeugen;
- Ablassen der Flüssigkeit aus dem Ablassmittel des Reaktors;
- Abziehen des Permeats über die Filterplatten (40);
- Versorgen der Flüssigkeit mit Luft über die Belüftungsplatten (50);
wobei der Reaktor Bakterien umfasst, die zum Reagieren mit der zu behandelnden Flüssigkeit angeordnet sind, während sich die zu behandelnde Flüssigkeit im Inneren des Reaktors befindet.

18. Verwendung einer Reaktoreinheit (10; 20) nach einem der Ansprüche 1 bis 14 oder eines Reaktorsystems (1) nach Anspruch 15 oder 16 zum Reinigen einer Flüssigkeit, vorzugsweise zum Reinigen von Abwasser.

19. Verwendung einer Reaktoreinheit (10; 20) nach einem der Ansprüche 1 bis 14 oder eines Reaktorsystems (1) nach Anspruch 15 oder 16 zum Züchten von Bakterien in einer Flüssigkeit.

## Revendications

1. Unité de réacteur (10 ; 20) pour le traitement d'un liquide, ladite unité de réacteur (10 ; 20) comprenant :
- une première série de plaques filtrantes parallèles (40) constituées d'un premier matériau, ledit premier matériau étant perméable aux liquides, chaque plaque filtrante (40) étant munie d'une ouverture de sortie (44) permettant de faire sortir le liquide qui a pénétré dans la plaque, où chaque plaque filtrante (40) de la première série de plaques filtrantes est disposée de manière à être immobile dans l'unité de réacteur ;
- une deuxième série de plaques d'aération (50) constituées d'un deuxième matériau, ledit deuxième matériau étant perméable à l'air, chaque plaque d'aération (50) étant munie d'une ouverture d'entrée (51) reliée à une source de gaz ou d'air pour laisser entrer du gaz ou de l'air, ladite/lesdites plaque(s) d'aération (50) étant placée(s) parallèlement à la(les) plaque(s) filtrante(s), où chaque plaque d'aération (40) de la deuxième série de plaques d'aération est disposée de manière à être immobile dans l'unité de réacteur ;
- au moins un élément disque (12) constitué d'un matériau de disque,
où
- chacun desdits au moins un élément disque (12) est disposé de manière à être adjacent à une plaque filtrante (40) ou à une plaque d'aération (50), mais en laissant un espace entre ladite plaque filtrante (40) ou plaque d'aération (50) et l'élément disque, et parallèlement auxdites plaques filtrante et d'aération (40, 50) ; et
- des moyens permettant de faire tourner (7 ; 16) l'au moins un élément disque autour d'un axe central traversant l'au moins un élément disque (12).

2. Unité de réacteur (10 ; 20) selon la revendication 1, comprenant également :
- au moins une conduite de sortie (29a) disposée pour passer au travers d'une ouverture de sortie (44 ; 54) dans chacune des plaques de la première série de plaques filtrantes (40) et de chacune des plaques de la deuxième série de plaques d'aération (50), où l'intérieur de l'au moins une conduite de sortie (29a) est en liaison fluide avec une ouverture de sortie (44) dans l'au moins une plaque filtrante (40) au travers de laquelle passe l'au moins une conduite de sortie (29a) ;
- au moins une conduite d'entrée d'air (29b) pour le raccordement à ladite source de gaz ou d'air, ladite au moins une conduite d'entrée d'air (29b) étant disposée pour passer au travers d'une ouverture d'entrée (41 ; 51) dans chacune des plaques de la première série de plaques filtrantes (40) et chacune des plaques de la deuxième série de plaques d'aération (50), où l'intérieur de l'au moins une conduite d'entrée (29b) est en liaison étanche à l'air avec une ouverture d'entrée (51) dans l'au moins une plaque d'aération (50) au travers de laquelle passe l'au moins une conduite d'entrée (29b).

3. Unité de réacteur (10 ; 20) selon la revendication 1 ou 2, où chacune desdites plaques de la première série de plaques filtrantes (40) comprend un ensemble de cavités internes (42) reliées aux moyens de sortie pour distribuer le liquide ayant pénétré à l'intérieur de la plaque vers les moyens de sortie de la plaque.

4. Unité de réacteur (10 ; 20) selon l'une quelconque des revendications 1 à 3, où chacune desdites plaques de la deuxième série de plaques d'aération (50) comprend un ensemble de cavités internes (52) reliées aux moyens d'entrée pour distribuer l'air entrant dans la plaque.

5. Unité de réacteur (10 ; 20) selon l'une quelconque des revendications 1 à 4, où ledit premier matériau et/ou ledit deuxième matériau comprend un matériau fritté ou un matériau polymère.

6. Unité de réacteur (10 ; 20) selon la revendication 5, où le matériau fritté est un matériau céramique ou métallique.

7. Unité de réacteur (10 ; 20) selon l'une quelconque des revendications 1 à 6, où le matériau de l'au moins un élément disque (12) comprend une matière plastique ou un alliage métallique.

8. Unité de réacteur (10 ; 20) selon l'une quelconque des revendications 1 à 7, où ledit au moins un élément disque (12) possède une configuration de surface (16 ; 17) permettant de créer un écoulement de liquide dans un sens essentiellement parallèle à l'élément disque (12) quand l'unité de réacteur (10 ; 20) est immergée dans ou submergée par le liquide et quand l'au moins un élément disque (12) tourne.

9. Unité de réacteur (10 ; 20) selon la revendication 8, où ladite configuration de surface comprend une ou plusieurs ouvertures traversantes, évidements ou élévations sur ledit au moins un élément disque (12).

10. Unité de réacteur (10 ; 20) selon l'une quelconque des revendications 8 ou 9, où ladite configuration de surface (16 ; 17) comprend une ou plusieurs saillies orientées du centre vers la périphérie de l'au moins un élément disque.

11. Unité de réacteur (10 ; 20) selon l'une quelconque des revendications 1 à 10, comprenant en outre au moins une entretoise (27) disposée de manière à maintenir un élément disque (12) de façon pivotante dans la périphérie de celui-ci.

12. Unité de réacteur (10 ; 20) selon l'une quelconque des revendications 1 à 11, comprenant en outre :
- un arbre (16) passant au travers d'un trou central de chacun desdits au moins un élément disque (12), où l'arbre (16) comprend des moyens permettant de faire tourner l'au moins un disque.

13. Unité de réacteur (10 ; 20) selon l'une quelconque des revendications 1 à 12, où le(s) moyen(s) de sortie de chacune des plaques filtrantes (40) de l'unité de réacteur est/sont en liaison liquide étanche avec le(s) moyen(s) de sortie des autres plaques filtrantes (40), le cas échéant, de l'unité de réacteur (10 ; 20).

14. Unité de réacteur (10 ; 20) selon l'une quelconque des revendications 1 à 12, où le(s) moyen(s) d'entrée de chacune des plaques d'aération (50) de l'unité de réacteur est/sont en liaison gazeuse étanche avec le(s) moyen(s) d'entrée des autres plaques d'aération (50), le cas échéant, de l'unité de réacteur (10 ; 20).

15. Système de réacteur (1) comprenant une ou plusieurs des unités de réacteur (10 ; 20) selon l'une quelconque des revendications 1 à 14.

16. Système de réacteur (1) selon la revendication 15, comprenant également :
- des moyens d'entrée de gaz ;
- des moyens d'entrée de liquide pour laisser entrer le liquide à traiter ;
- des moyens de sortie de liquide pour laisser sortir le liquide traité ; et
- des moyens motorisés (7) pour faire tourner l'au moins un disque (12) de chaque unité de réacteur (10 ; 20).

17. Méthode de traitement d'un liquide dans un système de réacteur (1) selon la revendication 15 ou 16, comprenant les étapes suivantes :
- entrée du liquide à traiter dans le système de réacteur (1), où ledit liquide entre sous une pression supérieure à la pression atmosphérique ;
- rotation de l'au moins un disque (12) autour d'un axe central traversant le disque (12) afin de générer un écoulement transversal du liquide sur l'au moins une plaque d'une unité de réacteur ;
- sortie du liquide par les moyens de sortie du réacteur ;
- extraction du perméat *via* les plaques filtrantes (40) ;
- apport d'air au liquide *via* les plaques d'aération (50) ;
où le réacteur contient des bactéries disposées pour réagir avec le liquide à traiter pendant que ledit liquide à traiter se trouve à l'intérieur du réacteur.

18. Utilisation d'une unité de réacteur (10 ; 20) selon l'une quelconque des revendications 1 à 14 ou d'un système de réacteur (1) selon la revendication 15 ou 16 pour nettoyer un liquide, de préférence pour épurer des eaux usées.

19. Utilisation d'une unité de réacteur (10 ; 20) selon l'une quelconque des revendications 1 à 14 ou d'un système de réacteur (1) selon la revendication 15 ou 16 pour mettre en culture des bactéries dans un liquide.
